(19) Europäisches Patentamt
European Patent Office
Office européen des brevets

(11) **EP 2 796 901 A2**

(12) **EUROPEAN PATENT APPLICATION**

(43) Date of publication:
**29.10.2014 Bulletin 2014/44**

(51) Int Cl.:
***G01V 1/38*** *(2006.01)*

(21) Application number: **14162085.6**

(22) Date of filing: **27.03.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **25.04.2013 US 201361815757 P
28.06.2013 US 201361840768 P**

(71) Applicant: **CGG Services SA
91300 Massy (FR)**

(72) Inventor: **Winfield, Gary
91300 Massy (FR)**

(74) Representative: **Regimbeau
20, rue de Chazelles
75847 Paris Cedex 17 (FR)**

(54) **Remotely Operated Modular Positioning Vehicle and Method**

(57)      Method and marine acoustic source array (110) for generating an acoustic wave in a body of water. The marine acoustic source array includes first and second external source sub-arrays (114a, 114c), each sub-array including one or more individual source elements; a first actuator device (200a) connected to the first external source sub-array (114a); and a second actuator device (200c) connected to the second external source sub-array (114c). The first actuator device (200a) has a corresponding cable (220a) configured to connect to a first lead-in (122a), and the second actuator device (200c) has a corresponding cable (220c) configured to connect to a second lead-in (122b) such that a position of the source array as a whole is controllable along a line substantially perpendicular to a path of the source array.

Figure 5

EP 2 796 901 A2

**Description**

## BACKGROUND

## TECHNICAL FIELD

Embodiments of the subject matter disclosed herein generally relate to methods and systems and, more particularly, to mechanisms and techniques for steering/positioning a tail end of one or more streamers while being towed during a seismic survey.

## DISCUSSION OF THE BACKGROUND

Marine seismic data acquisition and processing generate a profile (image) of a geophysical structure under the seafloor. While this profile does not provide an accurate location of oil and gas reservoirs, it suggests, to those trained in the field, the presence or absence of these reservoirs. Thus, providing a high-resolution image of geophysical structures under the seafloor is an ongoing process.

Reflection seismology is a method of geophysical exploration to determine the properties of earth's subsurface, which are especially helpful in the oil and gas industry. Marine reflection seismology is based on using a controlled source of energy that sends energy into earth. By measuring the time it takes for the reflections to come back to plural receivers, it is possible to evaluate the depth of features causing such reflections. These features may be associated with subterranean hydrocarbon deposits.

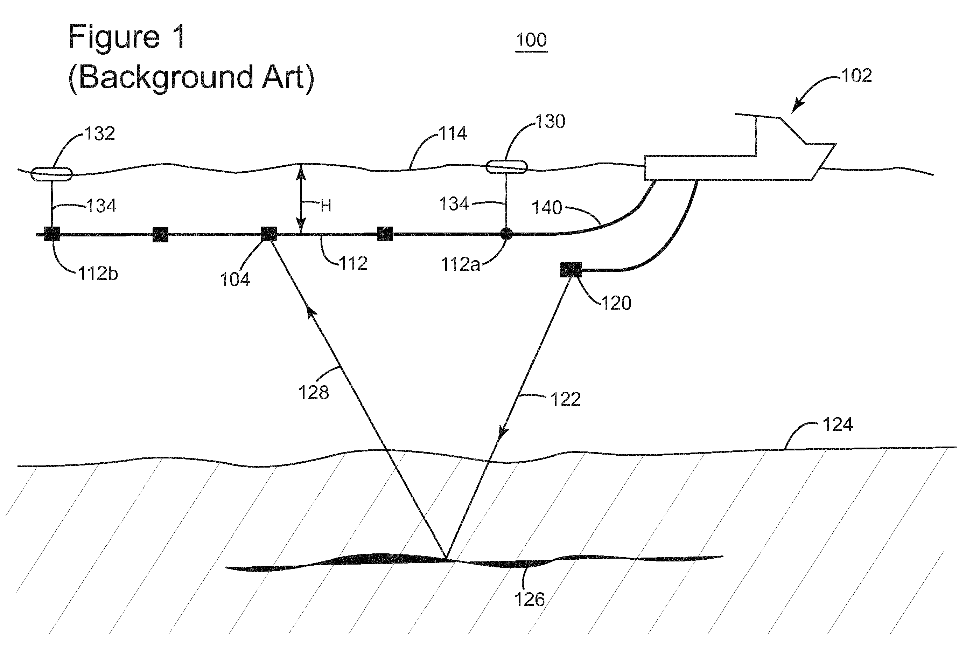

A traditional system 100 for generating seismic waves and recording their reflections off geological structures present in the subsurface is illustrated in Figure 1. Vessel 102 tows an array of seismic receivers 104 provided on streamers 112. The streamers may be disposed horizontally, i.e., lying at a constant depth H relative to the ocean's surface 114, or have spatial arrangements other than horizontal. Vessel 102 also tows a seismic source array 120 configured to generate a seismic wave 122. Seismic wave 122 propagates downward toward the seafloor 124 and penetrates it until eventually a reflecting structure 126 (reflector) reflects the seismic wave. Reflected seismic wave 128 propagates upward until it is detected by receiver 104 on streamer 112. Based on the data collected by receivers 104, a subsurface image is generated by further analyses of the collected data.

Seismic source array 120 includes plural individual source elements which may be distributed in various patterns, e.g., circular, linear, at various depths in the water so that a broadband source is formed.

For maintaining a certain depth of the streamer and also for detecting the streamer's location when towed by the vessel, a head float 130 is attached to the head end 112a of streamer 112, and a tail buoy 132 is attached to the tail end 112b of streamer 112. Note that a front-end gear 140 connects streamer's head end 112a to vessel 102. By controlling a length of cables 134 that connect the streamer to the head float and tail buoy, the streamer's depth is controlled. By observing the head float and the tail buoy's geographical positions, the streamer's approximate location is inferred.

However, new developments in streamer technology require that the streamer does not have a horizontal distribution as illustrated in Figure 1. There are cases when the streamer is curved or slanted, which makes the tail end 112b have a greater depth than head end 112a. While typically a length of cables 134 is between 6 and 15 m, it is not unusual with the new streamer technology to have a tail end 112b depth between 20 and 40 m.

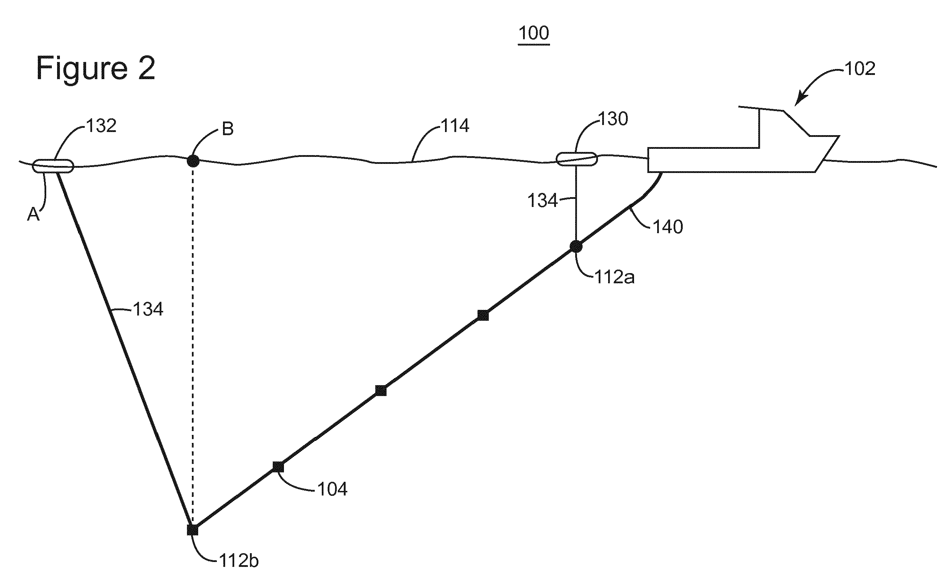

Thus, for these situations the tail buoy becomes a problem because its horizontal location A is unlikely to match horizontal location B of the tail end, as illustrated in Figure 2. Also, establishing the tail end's desired depth becomes problematic because a length of cable 134 does not match the tail end depth due to high drag exerted by the water on the tail buoy.

Therefore, it would be desirable to provide systems and methods that provide a steerable solution for a streamer tail end while not affecting its location.

## SUMMARY

According to one embodiment, there is a modular positioning vehicle configured to be attached to a tail end of a marine streamer. The positioning vehicle includes a chassis; a data connector attached to an end of the chassis and configured to be attached to the tail end of the streamer and to transmit data; a power storage unit attached to the chassis and configured to store power; and a depth adjustment unit attached to the chassis and configured to react to the transmitted data to change a depth of the chassis.

According to another embodiment, there is a seismic survey system configured to collect seismic data. The system includes a first set of streamers, each streamer having a first head end connected to a first head float and a first tail end connected to a tail buoy; and a second set of streamers, each streamer having a second head end connected to a second head float and a second tail end connected to a modular positioning vehicle. The modular positioning vehicle is remotely controlled to adjust its depth during the seismic survey system.

According to still another embodiment, there is a method for collecting seismic data. The method includes towing with a vessel a set of streamers, wherein head ends of the streamers are connected to corresponding head floats; and adjusting depths of tail ends of the set of streamers with corresponding modular positioning vehicles. The modular positioning vehicles are attached to the tail ends of the streamers and they are remotely controlled from the vessel.

## BRIEF DESCRIPTION OF THE DRAWINGS

The accompanying drawings, which are incorporated in and constitute a part of the specification, illustrate one or more embodiments and, together with the description, explain these embodiments. In the drawings:

Figure 1 is a schematic diagram of a conventional seismic survey system;
Figure 2 illustrates a seismic survey using a slanted streamer;
Figure 3 illustrates a curved and depth-changing streamer;
Figure 4 illustrates a depth-changing streamer having a head end connected to a head float and a tail end connected to a modular positioning vehicle according to an embodiment;
Figure 5 is a schematic diagram of a modular positioning vehicle according to an embodiment;
Figure 6 is a schematic diagram of a streamer spreader having one or more streamers provided with modular positioning vehicles according to an embodiment;
Figure 7 is a flowchart of a method for using a modular positioning vehicle for controlling a position of a streamer's tail end according to an embodiment; and
Figure 8 is a schematic diagram of a controller for steering a streamer.

## DETAILED DESCRIPTION

The following description of the exemplary embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to the terminology and structure of a remotely operated vehicle that is attached to an end of a streamer for controlling its depth. However, the embodiments to be discussed next are not limited to a depth control or to controlling the end of a streamer, but they may applied to control a lateral position of the streamer end or to control a marine element different from a streamer.

Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

Emerging technologies in marine seismic surveys make use of streamers that have a depth-changing profile. Such a streamer is disclosed in U.S. Application No. 13/471,561 and U.S. Application No. 13/272,428, both of which are owned by the assignee of the present application. The content of these applications is incorporated herein by reference.

According to an embodiment, seismic data is collected using streamers having a depth-changing profile. These kinds of streamers were disclosed in French filed Patent Application Serial No. FR1050276, entitled, Method and Device to Acquire Marine Seismic Data, the entire content of which is incorporated herein by reference, and also in U.S. Patent Application No. 13/272,428 (herein '428), entitled, Method and Device to Acquire Seismic Data, and filed October 13, 2011, the entire content of which is incorporated herein by reference.

The process of gathering marine seismic data has been discussed in '428 and thus, this process is not repeated herein. Further, the above-identified patent application identified the possibility of gathering data not only by using traditional streamers, i.e., detectors lying along horizontal lines or along a slanted line, but also using novel streamers in which part of the detectors may lie on a curved profile, or streamers that have multiple slanted sections.

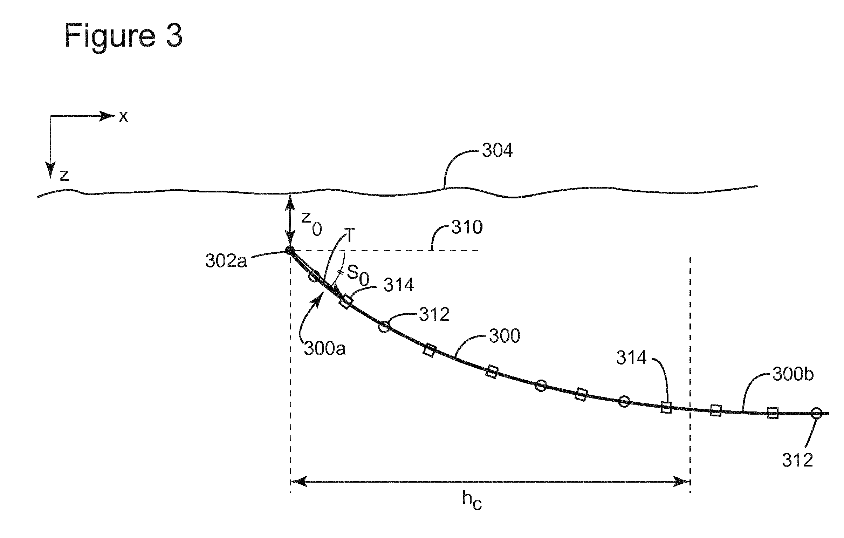

One such configuration is illustrated in Figure 3, in which a streamer 300 has a variable-depth (curved) profile. This profile may be parameterized by three parametric quantities, $z_0$, $s_0$ and $h_c$. Note that not the entire streamer has to have the curved profile. In other words, the curved profile should not be construed to always apply to the entire length of the streamer. While this situation is possible, the exemplary embodiments do not prohibit a streamer having only a given length curved. The first parameter $z_0$ indicates the first detector 302a's depth relative to the water surface 304. This parameter may have a value in the range of meters to tens of meters. For example, $z_0$ may be around 6 m. However, as would be recognized by those skilled in the art, the value of $z_0$ depends on each application and may be related to the ocean bottom's depth, the reflectors' depth, the power of the sound source, etc.

The second parameter $s_0$ is related to the slope of the initial part 300a of streamer 300 relative to a horizontal line 310. This parameter $s_0$ is determined by a tangent T to the initial part 300a of the streamer and horizontal line 310. Note that the slope of the curved profile at point 302a is given by a ratio of the change of the curved profile along the Z axis with respect to the change along the X axis. The slope is thus equal to the mathematical value of the tangent of the angle $s_0$, i.e., slope (at point 302a in Figure 3) = tan (so). Further, note that for small angles (e.g., five or fewer degrees), tan (so) is approximately equal to $s_0$, if the angle is expressed in radians and not in degrees. Thus, for small angles, the slope and the angle may be used interchangeably. In one embodiment, the value of $s_0$ may be between 0 and 6 degrees. The example shown in Figure 3 has an initial angle $s_0$ equal to substantially 3 degrees. Note that the profile of streamer 300 in Figure 3 is not drawn to scale because an angle of 3 degrees is a relatively small distance.

The third parameter $h_c$ indicates a horizontal length (distance along the X axis in Figure 3 measured from first detector 302a) of the streamer's curved portion. This parameter may be in the range of hundreds to thousands of meters. For example, $h_c$ is around 3,000 m for the configuration shown in Figure 3. This parameter defines the end of the curved part of streamer 300. In other words, streamer 300 may have a first portion 300a with a first curved profile, and a second portion 300b that is either flat or has a different curved profile. Parameter $h_c$ defines first portion 300a. Note that in one application streamer 300 has both first portion 300a and second portion 300b, while in another application streamer 300 has only first portion 300a. In other words, in some embodiments, the streamer does not extend along the entire curved profile, i.e., a length of the streamer projected on X axis is less than $h_c$. Receivers 312 are shown distributed along the streamers. The receivers may include a hydrophone, an accelerometer or any other device that can receive a seismic signal in a marine environment or any number of the aforementioned devices that are substantially co-located. "Substantial co-location" shall mean herein such a spatial configuration of the locations of all devices within the receiver that seismic processing can effectively be performed by assuming a single location of the receiver. For practical purposes, receiver depth shall mean vertical distance from the reciever to the ocean surface.

According to another embodiment, streamer 300's curved profile may be described, approximately, by the following equations:

$$(1) \ \ z(h) = z_0 + s_0 h \left( 1 - 0.5 \left( \frac{h}{h_c} \right) \right) \quad for \ h \le h_c \ ,$$

and

$$(2) \ \ z(h) = z_0 + s_0 \cdot 0.5 \cdot h_c \quad for \ h > h_c \ .$$

In these equations, z is measured along the Z axis and h is measured along the X axis, where Z is perpendicular to the water surface and X extends along the water surface. Also, note that only equation (1) may be enough to define the streamer's shape, depending on the streamer's length. In other words, in some embodiments, the streamer does not have to have the flat portion. For these specific equations, it was found that clarity of the sub-surface images improved substantially. Those skilled in the art would understand that the values provided by equations (1) and (2) are approximate because receivers 312 are under constant motion exerted by various water currents and the vessel's movement. In other words, it is understood that detectors provided substantially on the curved profile described by equation (1) and/or (2), e.g., at positions as close as 10 to 20% to the real curve in terms of actual depth z(h), are envisioned to be covered by the above-mentioned equations. The same is true for birds 314 configured to maintain the curved profile, which may be one of a parabola, a circle, a hyperbola or a combination of these shapes.

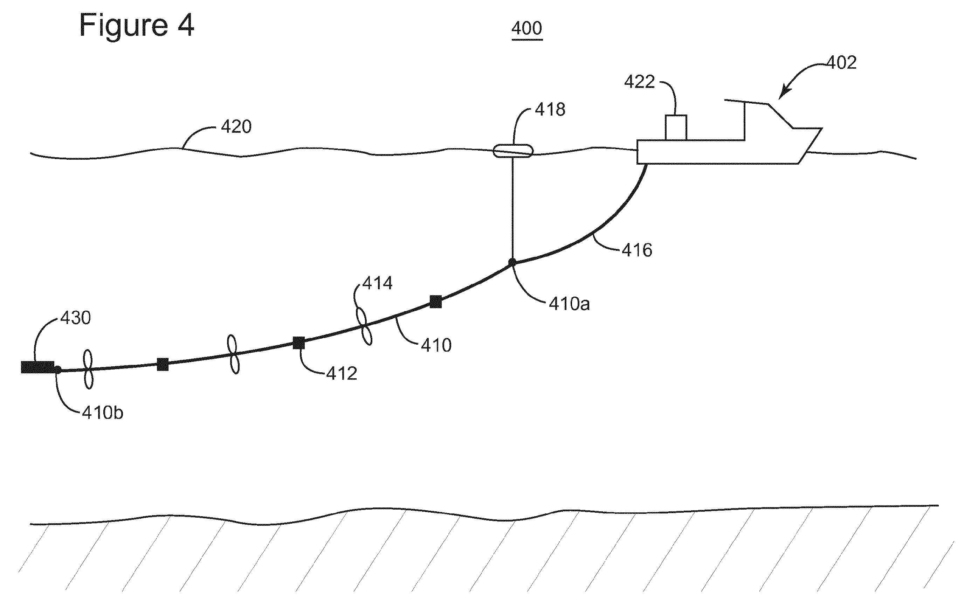

Within this context, now discussed is an embodiment that uses a novel configuration for positioning the streamer's tail end. Figure 4 shows a side view of a seismic survey system 400 that includes a vessel 402 towing at least one streamer 410. Streamer 410 is shown having a depth-changing profile and may be attached, at head end 410a, to vessel 402 through a lead-in cable 416. Head end 410a is also attached to a head float 418 that floats at or below water surface 420. The streamer's tail end 410b is attached to a modular positioning vehicle 430. Thus, in one embodiment, streamer's tail end 410b is not connected to a tail buoy. In fact, in this embodiment, streamer 410 has no tail buoy. However, note that vessel 402 tows a streamer spread, i.e., a plurality of streamers at the same time. Thus, while streamer 410 illustrated in Figure 4 does not have a tail buoy, other streamers in the spread may have the tail buoy and not the positioning vehicle 430. In other words, according to this embodiment, at least one streamer in a spread has its tail buoy replaced by the positioning vehicle. Streamer 410 may include plural receivers 412 for recording the seismic data and/or positioning device 414 (e.g., birds) for controlling a position of the streamer and/or a shape of it.

In one embodiment, a controller 422 located on vessel 402 is connected, as will be discussed later, with positioning vehicle 430 for controlling its position while being towed underwater. Controller 422 may exchange data with the positioning vehicle through the streamer or wirelessly (e.g., radio frequency, as will be discussed later).

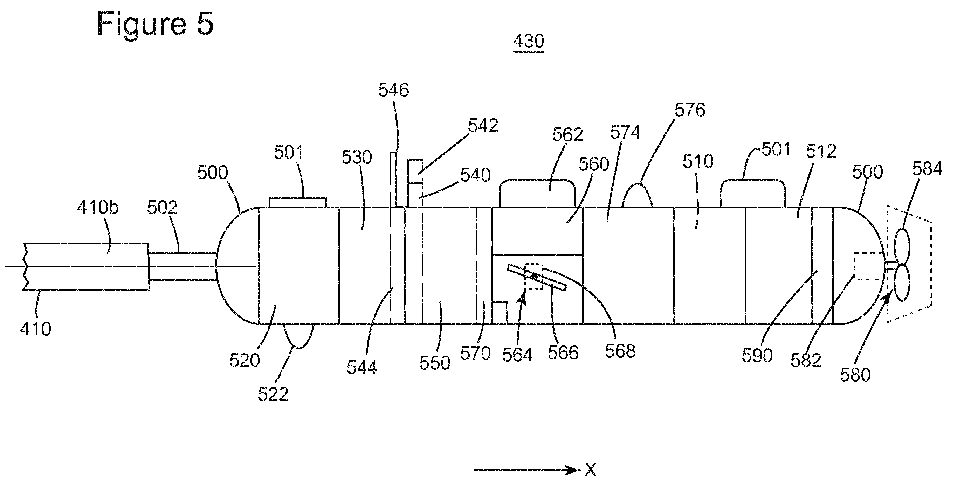

A possible configuration of the positioning vehicle is now discussed with reference to Figure 5. Positioning vehicle 430 may have a modular structure, i.e., it may include various units that may or may not be present when positioning vehicle 430 is used underwater. The various units are removably attached to a chassis, and they may be protected by a cover (not shown). This modular structure allows seismic survey operator to configure the positioning vehicle according to various seismic needs, i.e., to add or remove units that are desirable or undesirable for a given job.

Positioning vehicle 430 has a chassis 500 that holds one or more units to be discussed next. The chassis may have one or more handles 501 for being handled. The chassis shape may be selected to be hydrodynamic, for example, cylindrical. Chassis 500 is connected through a power and data connection 502 to the tail end 410b of streamer 410. Thus, data and power can be exchanged with the streamer and with controller 422 of vessel 402. In one application, only data is exchanged with streamer 410 and power is stored in a power storage unit 510. Power storage unit 510 may include any device capable of storing energy, e.g., a battery. Power storage unit 510 may be electrically connected to a generator module 512 capable of generating energy, solar panel, hydrodynamic power generator, a hydrogen fuel cell, etc., so that power storage unit 510 may be recharged during the seismic survey.

An acoustic unit 520 may be mounted on chassis 500. Acoustic unit 520 may be configured to communicate with other acoustic units installed on streamer 410 or other streamers of the spread so that a position of tail end 41 0b is determined relative to other tail ends and parts of the spread. Such an acoustic system is known in the art and currently used for determining the positions of the streamers in a spread relative to each other. Acoustic unit 520 may include a transducer 522 for communicating with other acoustic units located on the streamer spread. Acoustic unit 520 may also communicate with a support vessel, or vessel 402 or tail buoys of other streamers.

A heading unit 530 may also be added to chassis 500. Heading unit 530 may include a gyroscope so that a heading of the positioning vehicle can be determined. Heading unit 530 may additionally include a compass. In one application, heading unit 530 includes the compass instead of the gyroscope. This information is sent to a controller as discussed next for adjusting the positioning vehicle's trajectory if necessary.

Further, chassis 500 may removably receive a global navigation system 540 that may include a global navigation satellite system (GNSS). The global navigation system 540 may be used when the positioning device is at the water surface or very close to it for receiving its absolute position. This position is used to correct its trajectory as discussed later. Global navigation system 540 may include an antenna 542 for achieving this functionality.

A radio frequency (RF) transceiver 544 may also be removably mounted on the chassis 500 together with an RF antenna 546. The RF transceiver may be used to directly communicate with vessel 402 when the positioning vehicle is surfacing. If the positioning vehicle is configured to also store seismic data recorded by the seismic receivers, the RF link may be used for transmitting quality control data and/or the recorded seismic data when the positioning vehicle surfaces.

An inertial navigation system (INS) 550 may be removably attached to the chassis and provides navigational support when the positioning vehicle is underwater and the global navigation system cannot be used. For example, the INS is able to calculate coordinates of the positioning vehicle's next target point based on a previous location (e.g., acquired from the global positioning system) and various measurements, e.g., depth, compass heading, speed, etc. In other words, the INS provides trajectory control between two points underwater when an exact position of the vehicle cannot be achieved using the general navigation system.

Another unit that may be removably attached to the chassis is a depth sensing module 560 configured to calculate the positioning vehicle's depth. This information may be shared with the INS and also with the vessel's controller 422. Depth sensing module 560 may also include a depth transducer 562 that effectively measures depth, e.g., by measuring a pressure of the environment. The same unit or a separate unit may provide depth adjustment. The depth adjustment unit 564 may include a wing 566 and a corresponding motor 568 that can adjust the wing as necessary. By changing the wing's orientation, the positioning vehicle can change its depth. A local controller 570 may coordinate the wing's adjustment based on, for example, information received from the depth sensing module, the INS, the global positioning system, data stored in a memory prior to launching the seismic survey, data received from controller 422, etc. Thus, in one application, local controller 570 collaborates with global controller 422 for changing/adjusting the positioning vehicle's position.

In another application, two or more wings 566 are used and may be configured to adjust the positioning device's depth and lateral position. For adjusting the lateral position of the positioning device, two or more wings 566 may be configured to independently rotate. Other mechanisms may be used as will be recognized by those skilled in the art.

Chassis 500 may also removably receive an acoustic positioning device 574 configured to establish a location of the positioning vehicle 430 based on acoustic waves exchanged with a support vessel. An example of an acoustic positioning device is an Ultra-Short Baseline (USBL) system, also sometimes known as Super Short Base Line (SSBL), which uses a method of underwater acoustic positioning. A complete USBL system includes a transceiver mounted on a pole under a vessel or on an underwater base, and a transponder/responder 576 mounted on the positioning vehicle 430. Controller 422 and/or 570 may be used to calculate the vehicle's position from the ranges and bearings the transceiver measures. For example, the transceiver transmits an acoustic pulse that is detected by the subsea transponder, which replies with its own acoustic pulse. This return pulse is detected by the transceiver on the vessel or underwater base. The time from transmission of the initial acoustic pulse until the reply is detected is measured by the USBL system and converted into a range. To calculate a subsea position, the USBL calculates both a range and an angle from the transceiver to the positioning vehicle. Angles are measured by the transceiver, which contains an array of transducers. The transceiver head normally contains three or more transducers separated by a baseline of, e.g., 10 cm or less.

Thus, a support vessel or the streamer vessel 402 may determine the location of the positioning vehicle while the vehicle is underwater and may transmit this measured position to the controller 570 during the survey, through the streamer such that the positioning vehicle is capable of correcting its trajectory if necessary (e.g., if a deviation from its target position is detected) while performing the seismic survey.

The positioning vehicle may also include a propulsion system 580 attached to, for example, an end of the chassis. One possible propulsion system includes a motor 582 and a propeller 584. Motor 582 may be controlled by controller 570 to either increase or decrease drag on the streamer. Propulsion system 580 may also be used as a power generator, i.e., if propeller 584 is rotated by the water currents and motor 582 acts to generate electric power. Other systems may be used for the propulsion system, e.g., jet pumps, water pumps, etc. In one application, the propulsion system is ducted, i.e., the jet from the propeller is directed inside a tunnel formed inside the body 500. This tunnel can be moved laterally or vertically to force the water (which is propelled by the propeller) in a different direction and therefore provide vertical or lateral (or a combination of both) steering of the device.

In one application, the positioning vehicle is neutrally buoyant or slightly positively buoyant. A buoyancy system 590 may be employed for providing this function. For example, buoyancy system 590 may have a system of chambers and valves that selectively allow water to enter one or more chambers. This process may be controlled by controller 570. For example, if all units and modules shown in Figure 5 are present in the positioning vehicle, controller 570 may decide to not flood any chamber inside buoyancy system 590. However, if one or more units or modules are not present inside the positioning vehicle, in order to maintain constant the vehicle's overall buoyancy, controller 570 may flood one or more chambers to compensate for the missing module's weight.

As discussed above, a positioning vehicle may include one or more of the modules or units discussed with reference to Figure 5. These modules may be configured to "plug" into a corresponding socket of the chassis. For example, each module may have a male or female connector, and the chassis has a corresponding female or male connector. Thus, a module or unit may be quickly added or removed to the positioning vehicle. In one application, the units are protected by a cover that attaches to the chassis. The cover needs to be opened or removed prior to reaching the modules or units. These male and female connectors may be waterproof in case water enters the positioning vehicle. In one embodiment, when the cover is closed, no water enters the chassis.

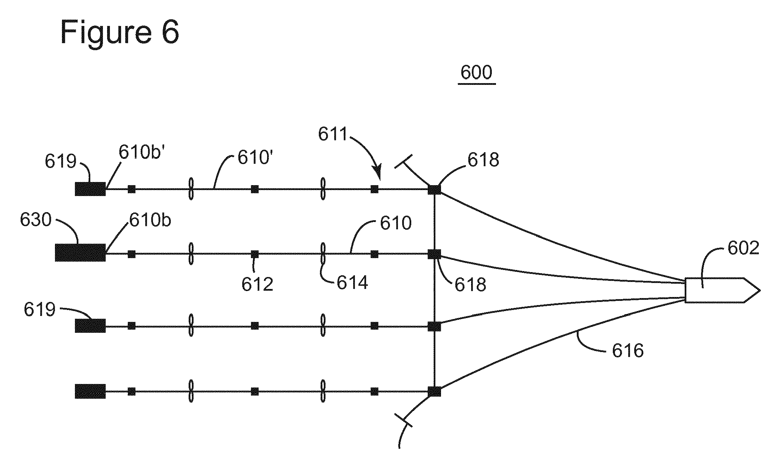

As previously discussed and now illustrated in Figure 6, one or more streamers 610 of a given spread 611 may have a positioning vehicle 630 attached to the tail end 610b while other streamers 610' have a tail buoy 619 attached to the tail end 610b'. All streamers 610 and 610' may have their head ends attached to corresponding head floats 618.

The one or more positioning vehicles may be used in various modes within the streamer. In one embodiment, streamer spread 611 has a first set of the streamers attached to corresponding positioning vehicles, while a second set of the streamers have tail buoys rather than positioning vehicles. This mode of operation uses the tail buoys of the second set of streamers to acquire location information (e.g., using corresponding global navigation systems) and to share/transmit this location information with the positioning vehicles. Thus, at least one tail buoy is fitted with a GNSS system and a USBL and/or SBL type acoustic system to allow computation of the absolute location (x, y, z coordinates) of the undersea units.

In another embodiment, each streamer has its tail end attached to a corresponding positioning vehicle. Thus, according to this embodiment, there are no tail buoys in the streamer spread (i.e., streamers 610' are replaced by streamers 610). Each positioning vehicle may have a specific payload, i.e., one positioning vehicle may have the RF unit but another positioning vehicle may not have that unit, etc. For this mode, the positioning vehicles may be surfaced at given times or positions, e.g., when the vessel changes lines so that the vehicles receive accurate location information and "lock" the INS modules on a known point. In other words, the INS receives accurate geographical locations from the global positioning systems when the vehicles are surfaced, and then the INS modules use these positions to further guide the vehicles when not at the water surface. It is also possible to temporarily surface the positioning vehicles to update their positions while following a certain shooting line. Further, to improve the INS modules' accuracy, the SBL acoustic network may be used to measure the relative distances between the various positioning vehicles and other acoustic network nodes, e.g., birds, receivers, etc., and then to share this information with the positioning vehicles.

According to still another embodiment, it is possible to use the positioning vehicles in coordination with the towing vessel to minimize the need to surface them for obtaining a GNSS lock. In this situation, the towing vessel or another support vessel determines the location of one or more positioning vehicles using the USBL transducer and then transmits this information from controller 422 through the streamer to corresponding positioning vehicles. The support vessel may be positioned close to the streamers' tails for more accurately detecting the positioning vehicles' locations.

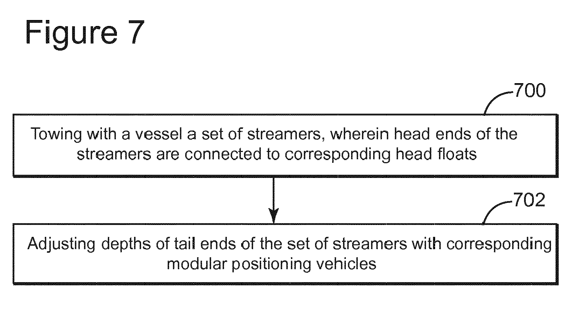

A method for towing a streamer spread with positioning vehicles is now discussed with regard to Figure 7. The method records seismic data by towing with a vessel in step 700 a set of streamers, wherein the streamers' head ends are connected to corresponding head floats, and adjusting in step 702 depths of tail ends of the streamer set with corresponding modular positioning vehicles. The modular positioning vehicles are fixedly attached to the tail ends of the streamers and remotely controlled from the vessel so the streamers achieve a desired variable-depth profile.

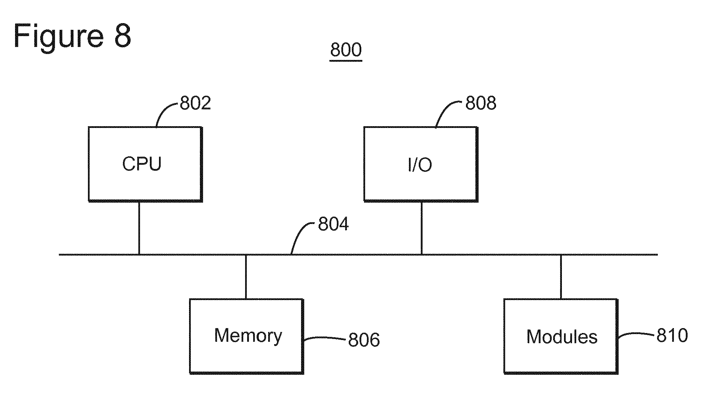

The local and/or central controller is schematically illustrated in Figure 8. Such a controller 800 includes a processor 802 and a storage device 804 that communicate via a bus 806. An input/output interface 808 also communicates with the bus 806 and allows an operator to communicate with the processor or the memory, for example, to input software instructions for operating the actuator devices. The input/output interface 808 may also be used by the controller to communicate with other controllers or interfaces provided on the vessel. For example, the input/output interface 808 may communicate with a GPS (not shown) for acquiring the source array's actual position. The controller 800 may be computer or a server. Controller 800 may communicate with one or more modules 810, where all the above systems and units may be such a module.

One or more of the exemplary embodiments discussed above provide a positioning vehicle, system and method for controlling a tail end of one or more streamers in a streamer spread. It should be understood that this description is not intended to limit the invention. On the contrary, the exemplary embodiments are intended to cover alternatives, modifications and equivalents, which are included in the spirit and scope of the invention as defined by the appended claims. Further, in the detailed description of the exemplary embodiments, numerous specific details are set forth in order to provide a comprehensive understanding of the claimed invention. However, one skilled in the art would understand that various embodiments may be practiced without such specific details.

Although the features and elements of the present exemplary embodiments are described in the embodiments in particular combinations, each feature or element can be used alone without the other features and elements of the embodiments or in various combinations with or without other features and elements disclosed herein.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

## Claims

1. A modular positioning vehicle (430) configured to be attached to a tail end of a marine streamer (610), the positioning vehicle (430) comprising:

    a chassis (500);
    a data connector (502) attached to an end of the chassis (500) and configured to be attached to the tail end (610b) of the streamer (610) and to transmit data;
    a power storage unit (510) attached to the chassis (500) and configured to store power; and
    a depth adjustment unit (564) attached to the chassis (500) and configured to react to the transmitted data to change a depth of the chassis (500).

2. The modular positioning vehicle of Claim 1, wherein the depth adjustment unit (564) comprises:

    a motor (568); and
    a wing (566) connected to the motor (568) and configured to change its orientation for changing the depth of the chassis.

3. The modular positioning vehicle of Claim 2, further comprising:

    a generator module (512) removably attached to the chassis and configured to generate power for the power storage unit (510).

4. The modular positioning vehicle of Claim 1, further comprising:

    a propulsion system (580) removably attached to the chassis and configured to generate trust along a longitudinal axis X of the chassis.

5. The modular positioning vehicle of Claim 1, further comprising:

   a depth sensing module (560) removably attached to the chassis and configured to calculate a depth of the chassis.

6. The modular positioning vehicle of Claim 5, further comprising:

   a local controller (570) configured to adjust the depth of the chassis based on information received from the depth sensing module.

7. The modular positioning vehicle of Claim 1, further comprising:

   an acoustic unit (520) removably attached to the chassis and configured to communicate with other acoustic units located on other marine streamers.

8. The modular positioning vehicle of Claim 7, further comprising:

   an acoustic positioning unit (574) removably attached to the chassis and configured to communicate with a vessel.

9. The modular positioning vehicle of Claim 1, further comprising:

   an inertial navigation system (550) removably attached to the chassis and configured to provide guidance during underwater travelling.

10. The modular positioning vehicle of Claim 9, further comprising:

    a heading unit (530) removably attached to the chassis and configured to provide a heading of the chassis;
    a global navigation system (540) removably attached to the chassis and configured to receive a geographical position; and
    a radio-frequency tranceiver (544) removably attached to the chassis and configured to communicate via radio waves with a vessel.

11. A seismic survey system (600) configured to collect seismic data, the system comprising:

    a streamer (610') having a head end connected to a head float (618) and a tail end connected to a modular positioning vehicle (630),
    wherein the modular positioning vehicle is remotely controlled to adjust its depth during the seismic survey system.

12. The system of Claim 11, wherein the modular positioning vehicle includes,
    a chassis (500);
    a data connector (502) attached to an end of the chassis (500) and configured to be attached to the tail end (610b) of a corresponding streamer (610) and to transmit data;
    a power storage unit (510) attached to the chassis (500) and configured to store power; and
    a depth adjustment unit (564) attached to the chassis (500) and configured to react to the transmitted data to change a depth of the chassis (500).

13. The system of Claim 12, wherein the depth adjustment unit (564) comprises:

    a motor (568); and
    a wing (566) connected to the motor (568) and configured to change its orientation for changing the depth of the chassis.

14. The system of Claim 13, further comprising:

    a generator module (512) removably attached to the chassis and configured to generate power for the power storage unit (510);

a propulsion system (580) removably attached to the chassis and configured to generate trust along a longitudinal axis X of the chassis;

a depth sensing module (560) removably attached to the chassis and configured to calculate a depth of the chassis;

a local controller (570) configured to adjust a depth of the chassis based on information received from the depth sensing module;

an acoustic unit (520) removably attached to the chassis and configured to communicate with other acoustic units located on other marine streamers;

an acoustic positioning unit (574) removably attached to the chassis and configured to communicate with a vessel;

an inertial navigation system (550) removably attached to the chassis and configured to provide guidance during underwater travelling;

a heading unit (530) removably attached to the chassis and configured to provide a heading of the chassis;

a global navigation system (540) removably attached to the chassis and configured to receive a geographical position; and

a radio-frequency tranceiver (544) removably attached to the chassis and configured to communicate via radio waves with a vessel.

15. A method for collecting seismic data, the method comprising:

towing with a vessel a first streamer (610), wherein a first head end of the first streameris connected to a first head float (618); and

adjusting a first depth of the tail end of the first streamer (610) with a first modular positioning vehicle (630), wherein the first modular positioning vehicle (630) is attached to the first tail end of the first streamer and the first modular positioning vehicle is remotely controlled from the vessel.

# Figure 1
(Background Art)

EP 2 796 901 A2

Figure 2

EP 2 796 901 A2

Figure 3

# Figure 4

<u>400</u>

EP 2 796 901 A2

# Figure 5

430

Figure 6

EP 2 796 901 A2

# Figure 7

700

Towing with a vessel a set of streamers, wherein head ends of the streamers are connected to corresponding head floats

702

Adjusting depths of tail ends of the set of streamers with corresponding modular positioning vehicles

Figure 8

800

CPU — 802

I/O — 808

804

Memory — 806

Modules — 810

EP 2 796 901 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 471561 A
- US 272428 A
- FR 1050276
- US 27242811 A